# EUROPEAN PATENT APPLICATION

(11) **EP 4 787 090 A1**
(43) Date of publication of application: **05.08.2026**
(21) Application number: 26155937.1
(22) Date of filing: 03.02.2026
(51) Int. Cl.: G05B 17/02, G05B 19/4097, G05B 19/418

(54) **METHOD FOR SUGGESTING OPTIMUM TOOLPATH PARAMETERS IN SUBTRACTIVE MANUFACTURING**

(30) Priority: 03.02.2025 IN 202541008715
(71) Applicant: DASSAULT SYSTEMES AMERICAS CORP., Waltham, MA 02451 (US)
(72) Inventor: Kattoju, Apparao, Bangalore (IN); SANKARANARAYANAN, Srikanth, Bangalore (IN); Akdim, Yasser, Aix-En-Provence (FR); Kharrat, Ali, Aix-en-Provence (FR); Berard, Simon, Aix-en-Provence (FR)
(74) Representative: Bandpay & Greuter

(57) **Abstract**

Embodiments train an artificial intelligence (AI) model to generate optimized parameters for part manufacturing. Embodiments generate a simulation data set including respective sets of manufacturing parameters with associated values. Embodiments generate a training data set using the generated simulation data set by performing a respective manufacturing simulation using each respective set of manufacturing parameters with associated values. Results of performing each respective manufacturing simulation include a representation of a part resulting from the respective manufacturing simulation and a toolpath of the respective manufacturing simulation. The training data set is composed of a subset of the results of performing each respective manufacturing simulation and respective sets of manufacturing parameters with associated values corresponding to the subset of the results. Embodiments train an AI model using the training data set generated, the AI model trained is configured to determine optimized manufacturing parameters.

## Description

### BACKGROUND

Subtractive manufacturing, i.e., machining, and additive manufacturing are common manufacturing techniques. In subtractive manufacturing, a blank piece of material is gradually carved away to reveal the desired product geometry. Somewhat oppositely, in additive manufacturing material is built-up over time to create an object. Subtractive manufacturing is often performed using computer numerical control (CNC) machines. Machining operations may be classified as roughing, semi-finishing, and finishing operations. Roughing is the initial stage of machining, where large amounts of material are removed from the blank piece of material; semi-finishing is the second stage of the machining processes and often utilizes more precise tooling passes in order to further refine the rough shape left by the roughing process; finishing is the final stage of the process often involving precise tooling and final removal of material to complete the desired product.

### SUMMARY

Maximizing efficiency is of high priority in subtractive and additive manufacturing. For instance, in subtractive manufacturing, efficiency often relates to an optimized toolpath for the machine to follow in performing machining operations, as well as optimized manufacturing parameters. Problematically, there are numerous parameters for manufacturing and determining optimized tool paths is extremely complicated. As such, there is a need for functionality that determines optimum toolpath parameters for manufacturing, e.g., subtractive manufacturing and additive manufacturing. Embodiments provide such functionality. Embodiments may maximize efficiency in manufacturing operations by removing the lengthy, human-centric, trial and error process legacy systems use to obtain optimized manufacturing parameter values. Specifically, embodiments may train an artificial intelligence model (AI) to determine optimized parameters for part manufacturing.

An example embodiment is directed toward a computer-implemented method for training an AI model to generate optimized parameters for part manufacturing. An embodiment of the method generates a simulation data set including respective sets of manufacturing parameters with associated values. To continue, a training data set is generated using the simulation data set generated by performing a respective manufacturing simulation using each respective set of manufacturing parameters with associated values. Results of performing each respective manufacturing simulation may include a representation of a part resulting from the respective manufacturing simulation and a toolpath of the respective manufacturing simulation. According to an embodiment, the training data set may be composed of a subset of the results of performing each respective manufacturing simulation and respective sets of manufacturing parameters with associated values corresponding to the subset of the results. Further, the method trains an AI model using the training data set generated. The AI model trained is configured to determine optimized manufacturing parameters.

According to an embodiment, the AI model trained may be configured to determine the optimized manufacturing parameters with optimized associated values.

An embodiment may further include receiving an indication of a key performance indicator (KPI) and receiving an indication of a given part. Such an embodiment may further include processing the indication of the KPI and the indication of the given part with the trained AI model to determine given manufacturing parameters for manufacturing the given part that optimizes the KPI. In an embodiment, the KPI may be at least one of a machining time, a part surface quality, and an amount of material removed. Further, in such an embodiment, the determined given manufacturing parameters may include optimized values for the given manufacturing parameters. An embodiment may further include manufacturing the given part utilizing the given manufacturing parameters determined.

According to an embodiment, a given representation of a given part resulting from a given respective manufacturing simulation may be a top-view image of the given part. In such an embodiment, the given representation of the given part resulting from the given respective manufacturing simulation may include depth information.

In another embodiment, a given representation of a given part resulting from a given respective manufacturing simulation may be a three-dimensional mesh model representation of the given part, e.g., a finite element model.

According to an embodiment, generating the training data set may include selecting the subset of the results of performing each respective manufacturing simulation based on one or more KPI.

In yet another embodiment, a given respective set of manufacturing parameters may include at least one of: a cutting tool, a material, a toolpath strategy, a tool diameter ratio, a cutting depth, a step-over or overlap ratio, a feed rate, a spindle speed, a start point, and an end point. In such an embodiment, the toolpath strategy may be: spiral morphing, back-and-forth, helical, concentric, or offset on part.

Embodiments may be employed to training an AI model to generate optimized parameters for any type of manufacturing. For instance, according to an embodiment, at least one respective manufacturing simulation of at least one part simulates additive manufacturing or subtractive manufacturing.

In an embodiment, the AI model is a convolutional neural network (CNN).

In another embodiment, the AI model is a first AI model, and the method may further include using the generated training data set generated to train a second AI model to predict representations of parts. In such an embodiment the predicted representations may be machined state representations, e.g., material-left images. Further, such an embodiment may train the second AI model to predict representations of parts for each toolpath strategy of a plurality of toolpath strategies.

Another embodiment is directed toward a computer-implemented system for training an AI model to generate optimized parameters for part manufacturing. An example embodiment of the system includes a processor and a memory with computer code instructions store thereon. The processor and the memory, with the computer code instructions, may be configured to cause the system to implement any embodiments or combination of embodiments described herein.

Yet another example embodiment is directed to a computer program product for training an AI model to generate optimized parameters for part manufacturing. In an example embodiment, the computer program product includes a non-transitory computer-readable medium with computer code instructions stored thereon. The computer code instructions are configured, when executed by a processor, to cause an apparatus associated with the processor to implement any embodiments or combination of embodiments described herein.

It is noted that embodiments of the methods, systems, and computer program products may be configured to implement any embodiments or combination of embodiments, described herein.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIGs. 1A-D show example graphical user interfaces (GUIs) for manufacturing software.
FIG. 2 is a flow diagram of a method for training an artificial intelligence (AI) model to generate optimized manufacturing parameters according to an embodiment.
FIG. 3 illustrates an example benefit realized by utilizing embodiments disclosed herein.
FIG. 4 shows a workflow for generating an optimum toolpath strategy and manufacturing parameters for a machining operation, according to an embodiment.
FIGs. 5A and 5B illustrate a plurality of example top-down images used to train an AI model, according to an embodiment.
FIG. 6 illustrates an example optimized toolpath strategy determined by an embodiment.
FIG. 7 illustrates an example depth image that may be used by embodiments.
FIG. 8A illustrates a method for determining ground truth data for training an AI model, according to embodiments.
FIG. 8B illustrates a method utilizing a simplified model network that may be used in the method for determining a ground truth of FIG. 8A by training an AI model.
FIG. 9 illustrates a method of generating material-left images and predicting optimized parameters by training an AI model, according to an embodiment.
FIG. 10 illustrates an example implementation of embodiments disclosed herein on an example software product.
FIG. 11 illustrates a computer network or similar digital processing environment in which embodiments may be implemented.
FIG. 12 is a simplified block diagram illustrating an example internal structure of a computer in the environment of FIG. 11.

### DETAILED DESCRIPTION

A description of example embodiments follows.

Subtractive manufacturing is a complex process in which real-world objects, e.g., a bracket, are created by gradually removing material from blanks. Subtractive manufacturing is often performing using computer numerical control (CNC) machining. In CNC, engineers and designers may provide a geometry of a final product to be machined to a computer controlled machining device. The computer may then cause the machine to perform a series of machining operations on a blank piece of material, gradually removing the material from the blank until the final part has been carved out. This process of removing material from a blank to reveal a desired part is what is referred to as subtractive manufacturing, or machining. In subtractive manufacturing, the CNC machine may use, for example, a rotating bit affixed to a computer-controlled gantry or arm that follows a predetermined path and gradually removes material from the blank layer-by-layer by carving away the material along its path. The path that the CNC machine follows to carve out the desired product is what is referred to as the toolpath.

There are a number of possible strategies for optimizing the toolpath as well as optimizing associated manufacturing parameters for use in defining a machining operation. Optimizing these strategies and parameters has historically involved a trial and error process over multiple iterations. Optimizing the manufacturing parameters is important in satisfying key performance indicators (KPI), such as reduction in machining time, which often directly correlates to an efficient toolpath as well as optimized manufacturing parameters.

Embodiments disclosed herein provide a novel solution for optimizing manufacturing parameters for part machining by training an artificial intelligence (AI) model to determined optimized manufacturing parameters, including optimized toolpath strategies, that will satisfy one or more KPI. By training an AI model to determine optimized toolpath strategies and manufacturing parameters, embodiments eliminate the aforementioned human-centric trial and error process.

There are a number of possible parameter combinations that define machining operations. For example, a pocketing operation, which is a common two-and-one-half dimension (2.5D) operation in CNC machining that involves removing material from a blank to create a cavity, i.e., a pocket, involves numerous parameters that may be varied in any number of combinations to define an optimized operation.

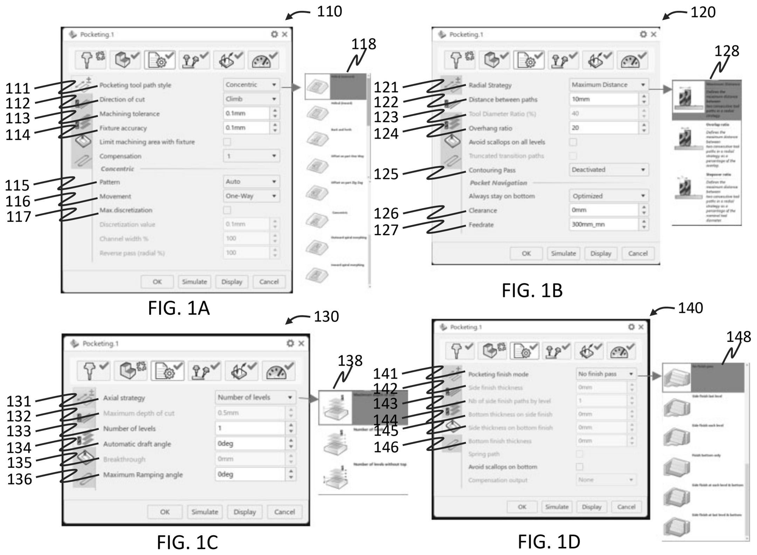

FIGs. 1A-D show example CNC software graphical user interfaces (GUIs) illustrating an example of the numerous parameters utilized in even a simple machining operation, such as a pocketing operation. FIGs. 1A-D depict the GUI panels, 110, 120, 130, and 140, respectively. Each GUI panel 110, 120, 130, 140 illustrates a subset of a plurality of parameters utilized in an example machining operation.

GUI panel 110 of FIG. 1A illustrates the parameters for the toolpath strategy. In the example GUI 110, the parameters include the toolpath strategy 111, e.g., concentric, the direction of cut 112, the machining tolerance 113, the fixture accuracy 114, pattern 115, movement 116, and maximum discretization 117. Each parameter may include numerous options. For instance, the tool path style parameters includes the options shown in the sub-menu 118.

GUI panel 120 of FIG. 1B illustrates the parameters for the radial strategy 121, including the distance between paths 122, the total diameter ratio 123, the overhang ratio 124, the contouring pass 125, the clearance 126, and the feedrate 127. Again, the foregoing parameters, e.g., 121-127, may each include numerous options, including the various radial strategy 121 options shown in the sub-menu 128.

GUI panel 130 of FIG. 1C illustrates the parameters for the axial strategy 131, including the maximum depth of cut 132, the number of levels 133, the automatic draft angle 134, the breakthrough 135, and the maximum ramping angle 136. Again, the foregoing parameters, e.g., 131-136, may each include numerous options, including the various axial strategy 131 options shown in the sub-menu 138.

Panel 140 of FIG. 1D illustrates the finishing parameters, such as the pocketing finish mode 141, the side finish thickness 142, the number of side finish paths by level 143, the bottom thickness on side finish 144, the side thickness on bottom finish 145, and the bottom finish thickness 146. Once again, the foregoing parameters, e.g., 141-146, may each include numerous options, including the various finish mode 141 options shown in the sub-menu 148.

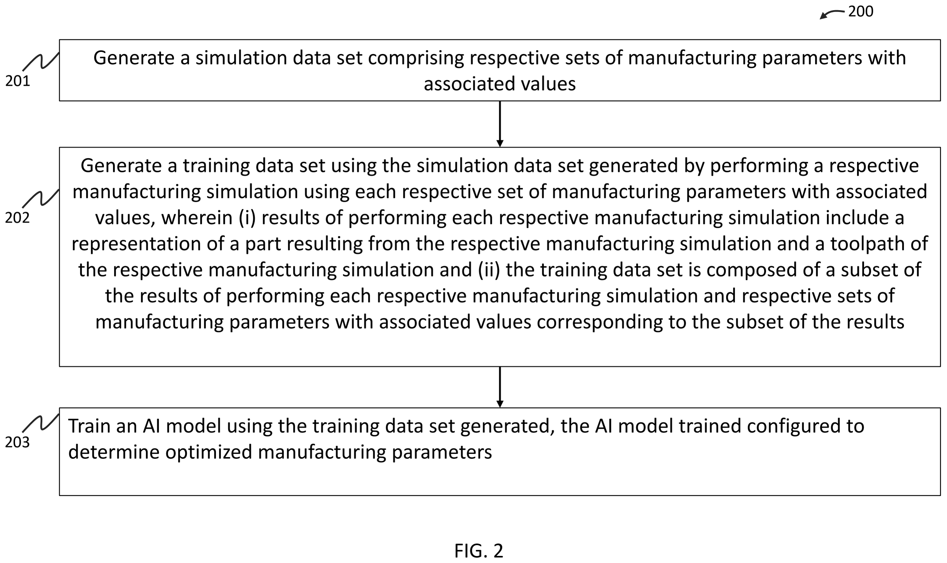

As can be seen in FIGs. 1A-D, an example machining operation, such as pocketing, includes multiple parameters, each with multiple options. It is noted that while an example pocketing operation is shown in FIGs. 1A-D, it should be understood that similar parameter configurations are required for each operation in manufacturing processes, e.g., subtractive manufacturing processes and additive manufacturing processes. Because of the multiple strategies and multiple parameters, optimizing manufacturing is generally impossible using existing trial and error techniques. Embodiments solve this problem by training an AI model to generate optimized parameters for part manufacturing. FIG. 2 illustrates one such example embodiment.

FIG. 2 is a flow diagram of a method 200 for training an AI model to generate optimized parameters for part manufacturing, according to an embodiment.

The method 200 starts at step 201 by generating a simulation data set comprising respective sets of manufacturing parameters with associated values. To continue, at step 202, the method 200 generates a training data set using the simulation data set generated at step 201. The training data set may be generated at step 202 by performing a respective manufacturing simulation using each respective set of manufacturing parameters with associated values obtained from the simulation data set. According to an embodiment, results of performing each respective manufacturing simulation include a representation of a part resulting from the respective manufacturing simulation and a toolpath of the respective manufacturing simulation. Further, according to an embodiment of the method 200, the training data set may be composed of a subset of the results from performing each respective manufacturing simulation and respective sets of manufacturing parameters with associated values corresponding to the subset of results. Thereafter, at step 203, the method 200 continues by training the AI model using the training data set generated. The AI model trained at step 203 is configured to determine optimized manufacturing parameters.

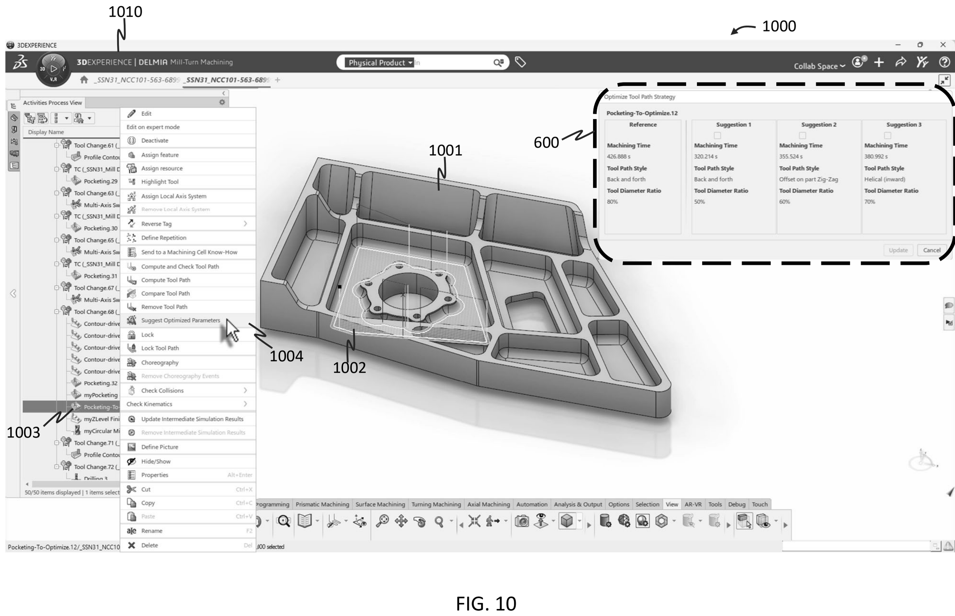

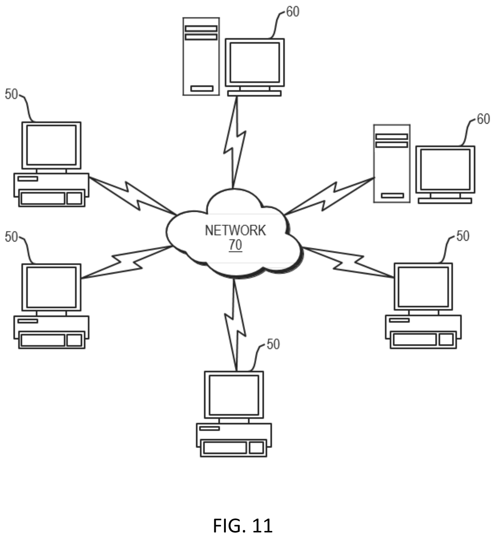

The method 200 is computer implemented and, as such, the functionality and effective operations, e.g., the steps 201-203, can be automatically implemented by one or more digital processors. Moreover, the method 200 can be implemented using any computing device or combination of computing devices known in the art. Amongst other examples, the method 200 can be implemented using the computer network environment described herein below in relation to FIG. 10 and the computer system described herein below in relation to FIG. 11.

The method 200 starts at step 201 by generating a simulation data set that includes respective sets of manufacturing parameters with associated values. According to an embodiment, in generating the simulation data set for a part, a manufacturing process may be created and simulated for each set of manufacturing parameters. As a result of simulating the plurality of manufacturing processes, a plurality of respective simulation results may be generated. These simulation results may include associated manufacturing results as well as representations of part resulting from the manufacturing processes. For example, the manufacturing results may include the machining time, and the total time, and the representation of a part may be a machined state (e.g., a material left image) of the part. Each of these manufacturing results based on the associated manufacturing parameters are collected as an output of the simulations and may be later used in training the AI model. Each respective set of manufacturing parameters may pertain to a respective, e.g., different, manufacturing scenario.

The simulation data set generated at step 201 may include data for any manufacturing parameters known to those of skill in the art. A given respective set of manufacturing parameters generated at step 201 of method 200 may include at least one of a cutting tool, a material, a toolpath strategy, a tool diameter ratio, a cutting depth, a step-over, a feed rate, a spindle speed, a start point, and an end point. In such an embodiment, the toolpath strategy may be a spiral morphing strategy, a back-and-forth strategy, a helical strategy, a concentric strategy, or an offset on part strategy. Further, the associated values may be varied across a range of values so as to generate a data set that encompasses varying manufacturing scenarios.

To illustrate step 201, consider an example where the simulation data set generated at step 201 includes three respective sets of manufacturing parameters, where the parameters are tolerance, number of levels, and overlap ratio and where each parameter has associated values. In such an example, the simulation data set may include: Set A [tolerance = 0.1, number of levels = 1, overlap ratio = 10%], Set B [tolerance = 0.01, number of levels = 2, overlap ratio = 20%], and Set C [tolerance = 0.001, number of levels = 3, overlap ratio = 30%].

At step 202, the method 200 generates the training data set using the simulation data set by performing a respective manufacturing simulation, e.g., additive or subtractive manufacturing, using each respective set of manufacturing parameters with associated values. In an embodiment, each manufacturing simulation is performed by using the simulation data set in an existing simulation/computer aided engineering tool, such as, for example, DELMIA^{®} Machining. To illustrate step 202, consider the aforementioned example where the simulation data set generated at step 201 is composed of respective sets of manufacturing parameters including Set A [tolerance = 0.1, number of levels = 1, overlap ratio = 10%], Set B [tolerance = 0.01, number of levels = 2, overlap ratio = 20%], and Set C [tolerance = 0.001, number of levels = 3, overlap ratio = 30%]. In this example, at step 202, three simulations a performed, a first simulation is performed using Set A, a second simulation is performed using Set B, and a third simulation is performed using Set C. The results of each simulation (the first, second, and third), include a representation of a part resulting from the manufacturing simulation and a tool path (e.g., a vector of points in space) of each simulation. Returning to this example, the simulations would yield three part representations of material removed state and three tool paths.

In the method 201, the training data set is composed of a subset of the results of performing each respective manufacturing simulation and respective sets of manufacturing parameters with associated values corresponding to the subset of the results. It is noted that the subset of results may include all of the results from performing the simulations at step 202, or some portion thereof. To further illustrate step 202, consider the foregoing example where the results include three part representations and three tool paths. In this example, assume the results generated using Set A and Set B are included in the subset. Thus, the training data set would include a representation of the part resulting from Set A conditions and the toolpath from Set A conditions (a subset of the results), Set A [tolerance = 0.1, number of levels = 1, overlap ratio = 10%] (manufacturing parameters with associated values corresponding to the subset of results), a representation of the part resulting from Set B conditions and the toolpath from Set B conditions (a subset of the results), and Set B [tolerance = 0.01, number of levels = 2, overlap ratio = 20%] (manufacturing parameters with associated values corresponding to the subset of results).

According to an embodiment of the method 200, a given representation of a given part resulting from a given respective manufacturing simulation at step 201 may include a top-view image of the given part demonstrating the amount of material removed from a blank in order to manufacture a given part. Using the simulation data set generated at step 201, a plurality of manufacturing simulations are performed using the parameters from the simulation data set in an existing simulation/computer aided engineering tool, such as, for example, DELMIA^{®} Machining. These manufacturing simulations may generate machined state images of images of parts, e.g., material removal state images of parts, and may also generate images including depth information, i.e., "depth images." In some embodiments relating to subtractive manufacturing, the "machined sate" or "material removal state" images may also be referred to as a "material left images." This generated information may be helpful for embodiments in determining optimized machining parameters. Further, the given representation resulting from the manufacturing simulation performed at step 201 may also include depth information, for example a "depth-image." Depth information may be helpful for embodiments in determining the variety of depths to remove material from the blank in order to manufacture the given part.

Further still, the given representation from the manufacturing simulation performed at step 201 may include, for each respective set of manufacturing parameter configurations, a three-dimensional mesh of the given part, for example a finite element model representation of the given part, i.e., a tessellated representation of the given part.

In an embodiment of the method 200, generating the training data set at step 202 may include selecting the subset of results of performing each respective manufacturing simulation based on one or more KPIs, i.e., selecting results that provide the most optimized manufacturing results with respect to the one or more KPIs. Embodiments may perform this selection with respect to any desired KPIs, including machining time, total time, and energy consumption, amongst other examples.

At step 203, the AI model is trained using the training data set generated. In an embodiment, the AI model may be trained in accordance with principles known to those of skill in the art. For example, the AI model may be trained using the geometry of the region to be machining, e.g., geometry of a blank, as well as the plurality of simulation results that are generated at step 202. Each simulation result may include, for example, machining time, total time, and the machined state of the part (e.g., as an image or a finite mesh) for a corresponding set of manufacturing parameters. As noted above, the trained AI model is configured to determine optimized manufacturing parameters. In an embodiment, the AI model is configured to determine optimized manufacturing parameters given a representation of a part to be manufactured.

Further, according to an embodiment of the method 200, the AI model trained at step 203 may be configured to determine the optimized manufacturing parameters with optimized associated values.

The AI model trained at step 203 of the method 200 may be, for example, a convolutional neural network (CNN). In such an embodiment, the CNN may adopt a U-NET like architecture for generating machined state images of parts with optimized associated values.

The method 200 may further include receiving an indication of a KPI, e.g., via user input, and an indication of a given part, e.g., a 3D computer-aided design (CAD) model of a part to be manufactured. The method 200 may process the indication of the KPI and the indication of the given part with the AI model trained to determine given manufacturing parameters for manufacturing the given part that optimizes the KPI. According to an embodiment, the given manufacturing parameters may include optimized values for the given manufacturing parameters. The KPI may be, for example, an indication to optimize the machining time associated with a given part, to optimize a quality criterion, e.g., the surface quality of a given part, or to optimize a metric of completeness of an amount of material removal from the blank, or a combination thereof. Moreover, an embodiment may further include manufacturing the given part utilizing the determined given manufacturing parameters for manufacturing the given part that optimizes the KPI. Such an embodiment may, amongst other examples, control a CNC machine in accordance with the given manufacturing parameters.

Further still, embodiments of the method 200 may train an additional AI model. Such an embodiment may train a second AI model to predict given representations of a given part, e.g., machined state images, top-down images, material left images, etc. The additional AI model may predict representations of parts resulting from manufacturing performed under varying manufacturing conditions, e.g., different tool path strategies and/or varying manufacturing parameters with varying values. This second AI model may be used at step 202 to perform a simulation. In such an embodiment, for example, performing the simulation may entail providing manufacturing parameters to the trained model and the trained model providing a representation of the machined state of the part.

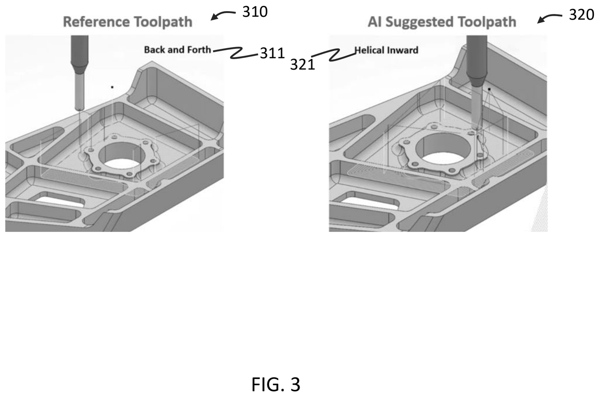

FIG. 3 shows an example implementation of a benefit realized by utilizing the toolpath and parameters suggested by the AI model trained in accordance with method 200, according to an embodiment. For example, an operator may have configured the manufacturing parameters and chosen the given toolpath 310 to perform a pocketing operation in a "back-and-forth" operation 311. Whereas, for example, an embodiment may instead determine via a trained AI model, e.g., trained in accordance with the method 200, an AI suggested toolpath 320 and associated manufacturing parameters illustrating that by using a "helical inward" toolpath 321, for example, a 30% gain in operator productivity as well as a 30% - 40% reduction in machining time may be realized.

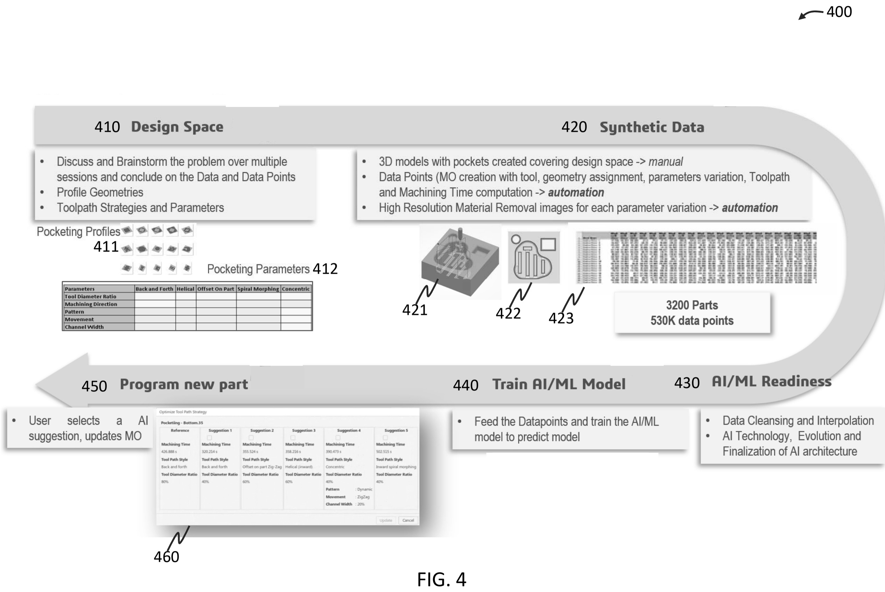

FIG. 4 shows a workflow 400 for generating an optimum toolpath strategy and manufacturing parameters for a machining operation, e.g., a pocketing operation, according to an embodiment. The method 400 begins at step 410 by determining profile geometries of parts, as well as the relevant profiles 411, toolpath strategies, and parameters 412. The profile geometries (e.g., the region defining the pocket to be machined) of the parts may be determined by a user selecting a face of a part to be pocketed, where the contour of the face defines the profile geometries of the pocket or region to be machined. The information determined at step 410 may be what is referred to as the simulation data set (e.g., generated at step 201 of FIG. 2) used to generate the training data set (e.g., at step 202 of FIG. 2).

Thereafter, step 420 begins the synthetic, i.e., training, data set generation process. Amongst other examples, such functionality may be performed at step 202 of the method 200. In an embodiment, training data set generation includes simulating the manufacturing of a given part, e.g., a part defined at step 410, multiple times by a computer program. Each given simulation utilizes varied manufacturing parameters, e.g., parameters with values that are varied (e.g., iterated), from a previous simulation, recording the parameters 423 utilized in the simulation, and recording the results of the simulation, such as the associated machining time. The results from each simulation may include a respective a top-down image 422 of the part manufactured in accordance with the associated manufacturing parameters and an image 421, e.g., a 2D image, that provides depth information for the part. The associated manufacturing parameters may include a plurality of different tools, parameters, toolpaths, machining times, and depth information, each with associated values.

The manufacturing parameters 423 stored within the training data set generated at step 420 may be a table comprised of rows and columns. Each column in the training data set may be associated with a given manufacturing parameter of a plurality of manufacturing parameters, such as, for example, a distance between each path of a CNC machine pass. Each row in the simulation data set may be associated with a given value for the corresponding manufacturing parameters; for example, a particular cutting tool with a particular column parameter used in generating a CNC machine toolpath using a selected pocket geometry, may be associated with manufacturing parameters.. The training data set may be generated by a processor performing a plurality of manufacturing simulations of a given part and recording the associated simulated parameters and associated parameter values and storing them in the training data set. Further, there may be, for example, hundreds of manufacturing parameters and thousands of potential associated values, therefore the training data set used to train the AI model may include several thousand data points.

To continue, at step 430 of the method 400, the training data set 423 is cleaned for input into the AI model. To illustrate, generated simulation data may have out-of-bounds values or images which do not add any benefit in training the AI model. Cleaning may include removing these values. After cleaning, the training data set is used to train the AI model at step 440. The trained AI model may then be configured to determine the optimum machining parameters to optimize a KPI, such as, for example, minimizing machining time. Finally, at step 450, a part to be manufactured is provided to the trained AI model and the trained AI model determines the optimized parameters for manufacturing the part. In turn, a manufacturing device, e.g., a CNC machine, may be programmed to manufacture the part utilizing the AI suggested toolpath and parameters.

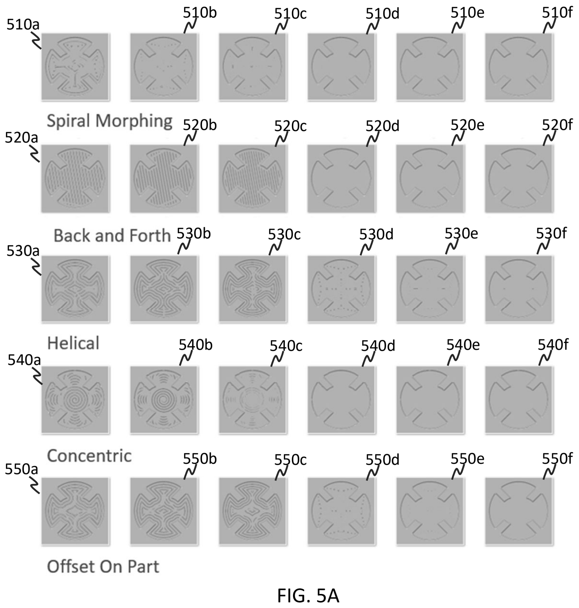

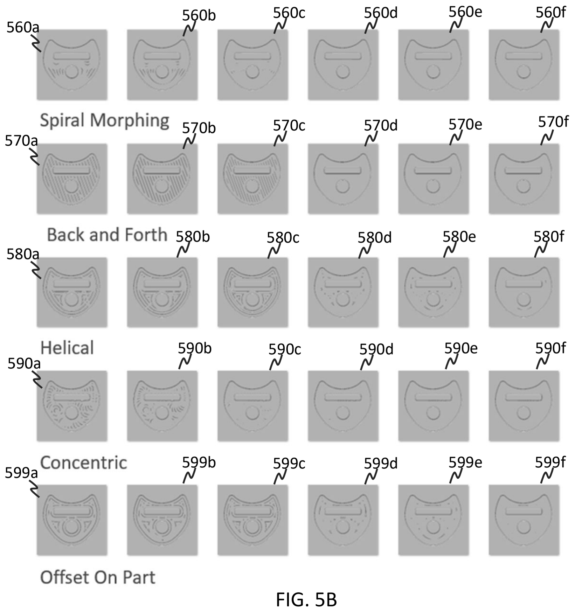

FIGs. 5A and 5B illustrate example representations of a given part resulting from a respective manufacturing simulation, e.g., top-down images or "material left" images of the given part. The material left images illustrate the "machined state" of a part manufactured using varying manufacturing parameter, e.g., tool diameter overlap ratio, settings. The material left images demonstrate how much material has been removed with each variation in manufacturing parameter settings, where the manufacturing parameter is, in this example, tool diameter overlap ratio. For example, material left images 510a - 510f represent six respective increasing percentages of tool diameter overlap ratio as a manufacturing parameter for a complete machining operation in a spiral morphing pattern. Image 510a represents the material left where the value associated with the tool diameter overlap ratio is 10%, and it can be observed that within the material left image 510a there remains a degree of material not removed by the machine. As the images progress from 510a (10% tool diameter overlap ratio) to 510b (20% tool diameter overlap ratio), 510c (30% tool diameter overlap ratio), 510d (40% tool diameter overlap ratio), 510e (50% tool diameter overlap ratio), and 510f (60% tool diameter overlap ratio), respectively, more material is removed.

Similar representations of material left based on manufacturing parameter variations are represented in FIGs. 5A and 5B for a plurality of toolpath strategies. For example, images 520a - 520f of FIG. 5A illustrate the removal of material for each associated tool diameter overlap ratio parameter value for a back-and-forth toolpath strategy; images 530a - 530f represent the removal of material for each associated tool diameter overlap ratio parameter value for a helical toolpath strategy, images 540a - 540f likewise illustrate the removal of material for each associated tool diameter overlap ratio parameter value for a concentric toolpath strategy, and lastly images 550a - 550f illustrate the removal of material for each associated tool diameter overlap ratio parameter value for an offset-on-part toolpath strategy.

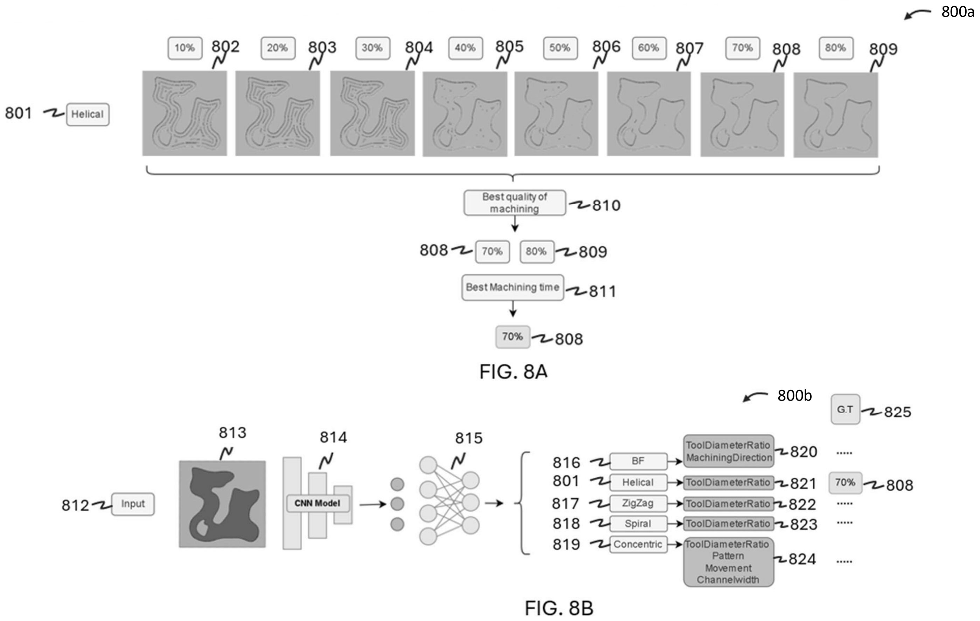

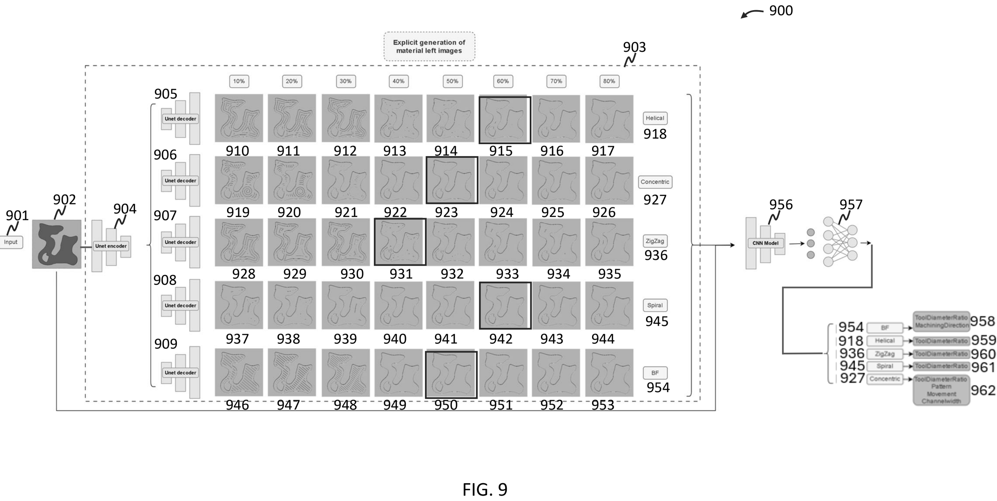

As illustrated in FIG. 5A, as the distance between each machining pass is reduced (i.e., as tool diameter overlap ratio percentage increases) it can be observed that the amount of material removed increases. It is important to note, however, that increasing the tool diameter overlap ratio may result in a higher machining time to complete the machining operation, and therefore may require more energy. As such, by processing a plurality of these material left images for a plurality of associated toolpath strategies, embodiments may determine an optimized manufacturing parameter value (e.g., tool diameter overlap ratio) that optimizes a given KPI while still adhering to some constraints, such as, for example minimizing machining time. (See, FIGs. 8A, 8B, and 9). Therefore, according to an embodiment, the information provided in the material left representations illustrated by FIGs. 5A and 5B may be used by the AI model to determine an optimized set of machining parameters for optimizing a given KPI and may subsequently be used to train the AI model.

FIG. 5B illustrates a similar example of material left images as illustrated in FIG. 5A, however the examples 560a-f, 570a-f, 580a-f, 590a-f and 599a-f, in FIG. 5B illustrate that the same process may be performed in situations where 100% of the material is not desired to be removed in a given pocketing operation.

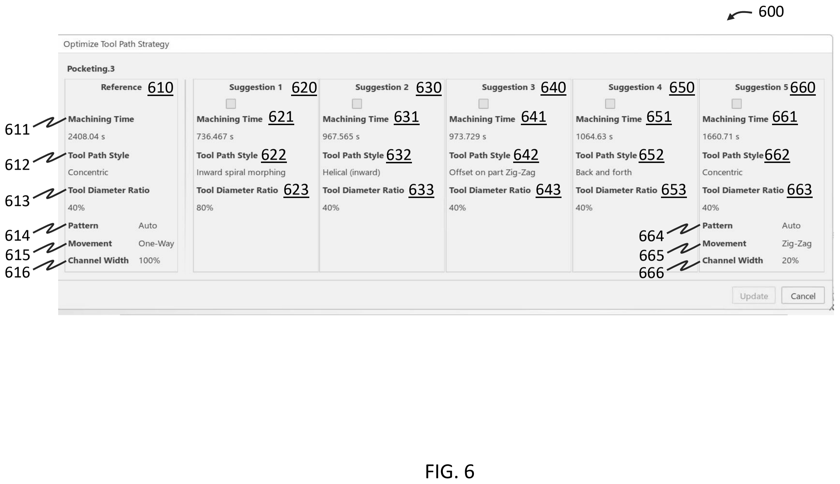

FIG. 6 illustrates an example optimized toolpath strategy suggestion 600 that may be determined by an AI model trained in accordance with an embodiment, e.g., the method 200. For example, an AI model (trained in accordance with an embodiment) may receive reference geometry parameters 610 such as for example, a reference machining time 611, a reference toolpath strategy 612, a reference tool diameter ratio 613, a reference pattern 614, a reference movement 615, and a reference channel width 616. The model may take the received geometry of a pocket, along with other process and tool parameters, and predict optimized parameters for each respective toolpath strategy and suggest the relevant optimized parameters for the respective toolpath strategy. According to an embodiment, AI suggested manufacturing parameters 620, 630, 640, 650, and 660 may include a resulting machining time (621, 631, 641, 651, and 661), toolpath strategy (622, 632, 642, 652, and 662), e.g., inward spiral morphing 622 for suggestion 620, helical 632 for suggestion 630, offset on part zig-zag 642 for suggestion 640, back-and-forth 652 for suggestion 650, and concentric 662 for suggestion 660, as well as tool diameter ratio (623, 633, 643, 653, 663). Moreover, suggestions may include additional parameter suggestions, such as the suggestion 660, which includes a suggested pattern 664, suggested movement 665 (e.g., zig-zag), and suggested channel width 666, as these parameters are related only to concentric toolpath strategies.

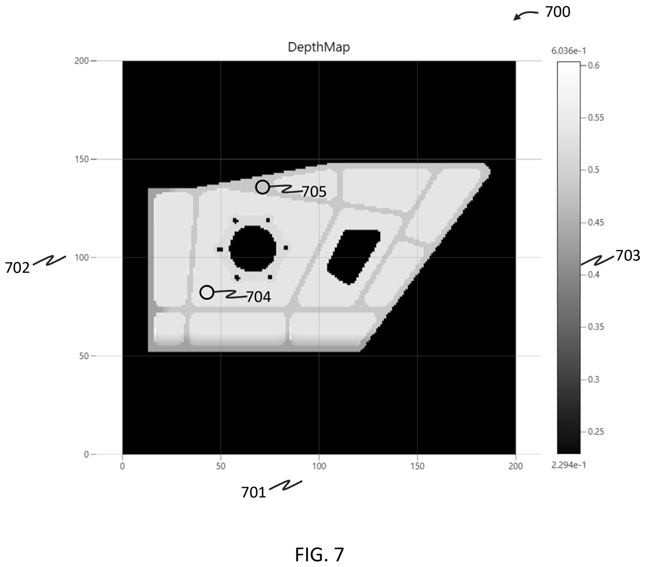

FIG. 7 illustrates an example 2D depth image 700 that may be used by embodiments. For instance, the depth image 700 is an example of a representation of a part to be manufactured. Further, when utilizing a trained AI model, according to an embodiment, a depth image may be used as input to the model, and the model may suggest an optimized depth or number of levels, e.g., an incremental increase in pocketing depth.

In the depth image 700 the x-axis 701 and y-axis 702 may represent measurement units to accurately represent geometry of a part to be manufactured with a CNC machine performing a machining operation, e.g., a pocketing operation. Scale 703 represents a shade coded representation of depth associated with the part represented in the image to be manufactured, i.e., a z-axis of machining. For example, as the gradient of the scale 703 moves from a darker shade to a lighter shade, the associated machining depth becomes greater. Therefore, darker areas of the image 700 represent areas of the part where little to no pocketing operation (i.e., machining depth) shall take place, whereas lighter areas of the image 700 represent areas of the part where a deeper pocketing operation shall take place. Each incremental change of shade of scale 703 may be associated with a particular machining depth unit (e.g., in meters) to inform the CNC machine precisely how deep to perform a pocketing operation. For example, it can be observed that lightly shaded areas of the part, e.g., area 704, may be machined to a depth of, for example, 0.59 units, whereas less lightly shaded areas, e.g., 705, of the part may be machined to a depth of, for example 0.49 units.

According to an embodiment, the AI model may be, for example, a CNN model. The AI model may be configured to process a top-view image of a part (e.g., 700 of FIG. 7) as an input and predict optimal manufacturing parameters for each of a plurality of machining strategies (e.g., back-and-forth, helical, zig-zag, spiral, concentric, etc.) for use in manufacturing, e.g., performing a pocketing operation. According to an embodiment, ground truth data for training the AI model may be determined by identifying setups (i.e., manufacturing conditions) that yield the best quality of machining while still optimizing a given KPI, e.g., lowest machining time. For example, an embodiment may first identify a subset of parameters, from amongst a plurality of machining parameters, that have indicated to yield the best quality of machining for a given strategy. From this identified subset, the set of parameters that minimize the machining time as well as optimizes a given KPI is selected as the optimal setup, e.g., the ground truth. The ground truths may be provided to the CNN as an indication of optimized parameter values for a given KPI. The CNN model may then be trained to predict this specific optimized configuration, thereby enabling the model to recommend parameter settings that are configured to balance efficiency and quality for each strategy.

FIGs. 8A and 8B illustrate methods 800a and 800b, respectively, for processing a series of top-view images (e.g., material left images 510a-f of FIG. 5A) to determine optimal manufacturing parameters (e.g., tool diameter overlap ratios 820 - 824) as well as a ground truth 825 for training an AI model, according to an embodiment.

FIG. 8A illustrates the processing 800a of generated material-left images (802, 803, 804, 805, 806, 807, 808, and 809) to determine a ground truth 808 that optimizes a given KPI (e.g., 811), according to an embodiment. FIG. 8B illustrates a method 800b for determining optimized manufacturing parameters (820, 821, 822, 823, and 824) with respect to the ground truth 825, using an AI model. While FIGs. 8A and 8B illustrate the determination of the ground truth 808 and 825 for the helical 801 toolpath strategy, it should be understood that the methods 800a and 800b may be performed to determine a ground truth for the back-and-forth 816, zig-zag 817, spiral 818, and concentric 819 toolpath strategies, as well as any other toolpath strategy.

FIG. 8A illustrates the determination of the ground truth 808 according to an embodiment. The material left images 802 - 809 may be generated by performing manufacturing simulations (e.g., step 202 of method 200) with varying manufacturing parameters (e.g., tool diameter overlap ratio) and may represent a part, e.g., 813, resulting from manufacturing under varying manufacturing parameters. For example, material-left image 802 represents the amount of material left (i.e., not machined away) for part 813 where the manufacturing parameter value for tool diameter overlap ratio is set to 10% for the machining process. Likewise, image 803 represents the amount of material left for part 813 where a tool diameter overlap ratio of 20% is utilized as a manufacturing parameter value for the machining process, image 804 represents the amount of material left for part 813 where a tool diameter overlap ratio of 30% is utilized as a manufacturing parameter value for the machining process, image 805 represents the amount of material left for part 813 where a tool diameter overlap ratio of 40% is utilized as a manufacturing parameter value for the machining process, image 806 represents the amount of material left for part 813 where a tool diameter overlap ratio of 50% is utilized as a manufacturing parameter value for the machining process, image 807 represents the amount of material left for part 813 where a tool diameter overlap ratio of 60% is utilized as a manufacturing parameter value for the machining process, image 808 represents the amount of material left for part 813 where a tool diameter overlap ratio of 70% is utilized as a manufacturing parameter value for the machining process, and image 809 represents the amount of material left for part 813 where a tool diameter overlap ratio of 80% is utilized as a manufacturing parameter value for the machining process.

From these respective material-left images 802 - 809 of machining the part 813 using the helical toolpath strategy 801 with respective parameter values (i.e., 10% 802, 20% 803, 30% 804, 40% 805, 50% 806, 60% 807, 70% 808, and 80% 809) for the toolpath diameter overlap ratio parameter value, the method 800a determines which tool diameter overlap ratio value satisfies a given KPI (e.g., has the best machining time 811) while still maintaining the best quality of machining 810. In this example, with respect to the helical toolpath strategy 801, a parameter value 70% 808 and parameter value of 80% 809 both represent the best quality of machining 810. However, a tool diameter overlap ratio value of 70% 808 has a better (i.e., lower) machining time 811 when compared to the machining time associated with a tool diameter overlap ratio value of 80% 809. Therefore, the method 800a determines the manufacturing parameter value for tool diameter overlap ratio is 70% 808 and this manufacturing parameter value may be used as a ground truth, e.g., 825, for training the AI model with respect to the helical toolpath strategy 801.

FIG. 8B illustrates a method 800b for the processing of an input 812, i.e., an image of a part 813 to be manufactured, via a CNN model 814 and a feed forward neural network 815 to determine a respective ground truth 825. According to an embodiment, the ground truth may be an optimized manufacturing parameter such as, for example, tool diameter overlap ratio, machining direction, pattern, and channel width, for a plurality of respective toolpath strategies (e.g., back-and-forth 816, helical 801, zig-zag 817, spiral 818, and concentric 819) for machining the given part 813. It should be understood that each manufacturing parameter may not be relevant for each respective toolpath strategy, and embodiments therefore may determine only the relevant manufacturing parameters as ground truths for a given toolpath strategy.

To continue, as illustrated in FIG. 8B, the image of the part 813 to be manufactured serves as an input 812 to the model 814. The image 813 is processed by both a CNN model 814, which may adopt a RES-NET like architecture, as well as a feedforward neural network 815 for classification.

According to an embodiment, the results of the processing provide a prediction of optimized manufacturing parameter values as respective ground truths 825. The ground truths may be used to train the AI model and/or manufacture the part 813. As determined in relation to FIG. 8A, an optimized tool diameter ratio 821 value for the helical 801 toolpath strategy may be 70% overlap 808, and may be used as a ground truth 825 for training the AI model with respect to the helical toolpath strategy 801, according to an embodiment. While only the ground truth 825 for the helical toolpath strategy 801 (i.e., 70% 808) is shown in FIG 8B, it should be understood that the methods 800a and 800b may also be applied for each of the toolpath strategies, back-and-forth 816, zig-zag 817, Spiral 818, and concentric 819 as well, to determine ground truths for each toolpath strategy.

FIG. 9 illustrates a method 900 to determine optimized manufacturing parameters by explicitly generating material-left images using a neural network 903, a neural network 956, and a feed forward neural network 957, according to an embodiment. In an embodiment of the method 900, the neural network 903 may use a U-NET like architecture, thereby enabling method 900 to predict machined states of parts with optimized parameters. Without utilizing the neural network 903, the method 900 may perform a similar method to methods 800a and 800b of FIGs. 8A and 8B.

The method 900 begins by receiving an image 902 as an input 901 to a CNN 956. In addition, a neural network 903 generates a plurality of material-left images 910 - 917, 919 - 926, 928 - 935, 937 - 944, and 946 - 953, based on the input 901 image 902. According to an embodiment, the neural network, i.e., CNN 903, is implemented using a U-NET like encoder 904 and decoder (i.e., 905, 906, 907, 908, and 909) structure. Each decoder 905 - 909 may be configured to generate respective material-left images, for respective manufacturing parameters (e.g., tool diameter overlap ratio), for each respective tool path strategy. For example, decoder 905 generates material-left images (i.e., 910 - 917) for the helical 918 toolpath strategy, decoder 906 generates material-left images (i.e., 919 - 929) for the concentric 927 toolpath strategy, decoder 907 generates material-left images (i.e., 928 - 935) for the zig-zag 936 toolpath strategy, decoder 908 generates material-left images (i.e., 937 - 944) for the spiral 945 toolpath strategy, and decoder 909 generates material-left images (i.e., 946 - 953) for the back-and-forth 954 toolpath strategy.

The generated material left images (i.e., 910 - 917, 919 - 926, 928 - 935, 937 - 944, and 946 - 953) represent a plurality of machined states of part 902 for a plurality respective percentages of tool diameter overlap ratio for each of the plurality of respective toolpath strategies 918, 927, 936, 945 and 954. For example, material-left images 910, 919, 928, 937, and 946 represent the machined state of the part 902 with a tool diameter overlap ratio of 10% for each of the respective toolpath strategies 918, 927, 936, 945 and 954, respectively; material-left images 911, 920, 929, 938, and 947 represent the machined state of the part 902 with a tool diameter overlap ratio of 20% for each of the respective toolpath strategies 918, 927, 936, 945 and 954; material-left images 912, 921, 930, 939, and 948 represent the machined state of the part 902 with a tool diameter overlap ratio of 30% for each of the respective toolpath strategies 918, 927, 936, 945 and 954; material-left images 913, 922, 931, 940, and 949 represent the machined state of the part 902 with a tool diameter overlap ratio of 40% for each of the respective toolpath strategies 918, 927, 936, 945 and 954; material-left images 914, 923, 932, 941, and 950 represent the machined state of the part 902 with a tool diameter overlap ratio of 50% for each of the respective toolpath strategies 918, 927, 936, 945 and 954; material-left images 915, 924, 933, 942, and 951 represent the machined state of the part 902 with a tool diameter overlap ratio of 60% for each of the respective toolpath strategies 918, 927, 936, 945 and 954; material-left images 916, 925, 934, 943, and 952 represent the machined state of the part 902 with a tool diameter overlap ratio of 70% for each of the respective toolpath strategies 918, 927, 936, 945 and 954; and material-left images 917, 926, 935, 944, and 953 represent the machined state of the part 902 with a tool diameter overlap ratio of 80% for each of the respective toolpath strategies 918, 927, 936, 945 and 954. The method 900 processes the plurality of material-left images 910 - 917, 919 - 926, 928 - 935, 937 - 944, and 946 - 953, generated from U-NET like CNN 903 with the RES-NET like CNN 956 and a feed forward neural network 957 to generate respective optimal manufacturing parameters 958, 959, 960, 961, and 962 (e.g., tool diameter overlap ratios), for each respective toolpath strategy 918, 927, 936, 945 and 954. For example, the method 900 may determine that for manufacturing the part 902 with a helical toolpath strategy 918, the relevant parameter (e.g., tool diameter overlap ratio) optimizes a given KPI with a parameter value of 60% 915; for manufacturing the part 902 with a concentric toolpath strategy 927, the relevant parameter optimizes a given KPI with a parameter value of 50% 923; for manufacturing the part 902 with a zig-zag toolpath strategy 936, the relevant parameter optimizes a given KPI with a parameter value of 40% 931; for manufacturing the part 902 with a spiral toolpath strategy 945, the relevant parameter optimizes a given KPI with a parameter value of 60% 942; and for manufacturing the part 902 with a back-and-forth toolpath strategy 954, the relevant parameter optimizes a given KPI with a parameter value of 50% 950. According to an embodiment, once the optimal manufacturing parameters 958, 959, 960, 961, and 962, for each respective toolpath strategy 918, 927, 936, 945, and 954 are determined the determined parameters for a respective tool path strategy may, in turn, be used to manufacture the part.

It should be understood that, while an example pocketing operation is described herein in relation to embodiments, embodiments may be utilized in relation to any number of machining operations. For example, for a roughing machining operation for a given part, the determination of the ground truth used to train the AI model may be similar to embodiments described above in relation to FIG. 2, FIG. 4, FIGs. 8A - 8B and FIG. 9. However, since roughing operations involve parts with varying depths at different positions, an embodiment may include depth information in both the input image (e.g., finite element mesh) of the given part as well as the image of the final part after machining . The overall model architecture will remain the same as described in relation to the example pocketing operation, however the inputs and outputs may differ due to distinct machining parameters for roughing operations. In addition, the data processing pipeline may also differ, as roughing operations involve working with 3D models rather than two dimensional (2D) images as in the pocketing operation.

FIG.10 illustrates an example implementation 1000 of embodiments disclosed herein on an example software product 1010. For example, a part 1001 may be designed in a given software product 1010. A user of the software product 1010 may select an area 1002 where a given pocketing operation 1003 is to take place during manufacturing. A user may then instruct the software product to suggest 1004 optimized manufacturing parameters for the given selected area 1002. The software product 1010 may then determine optimized manufacturing parameters in accordance with, for example, methods 200, 400, 800a-b, and/or 900 disclosed herein, and provide the user with a suggestion of an optimized toolpath strategy, i.e., suggestion 600 (See, FIG. 6).

### Computer Support

FIG. 11 is a schematic view of a computer network in which embodiments may be implemented. Client computer(s)/devices 50 and server computer(s) 60 provide processing, storage, and input/output (I/O) devices executing application programs and the like. Client computer(s)/device(s) 50 can also be linked through communications network 70 to other computing devices, including other client device(s)/processor(s) 50 and server computer(s) 60. The communications network 70 can be part of a remote access network, a global network (e.g., the Internet), cloud computing servers or service, a worldwide collection of computers, local area or wide area networks, and gateways that currently use respective protocols (e.g., TCP/IP, Bluetooth^{®}, etc.) to communicate with one another. Other electronic device/computer network architectures are also suitable.

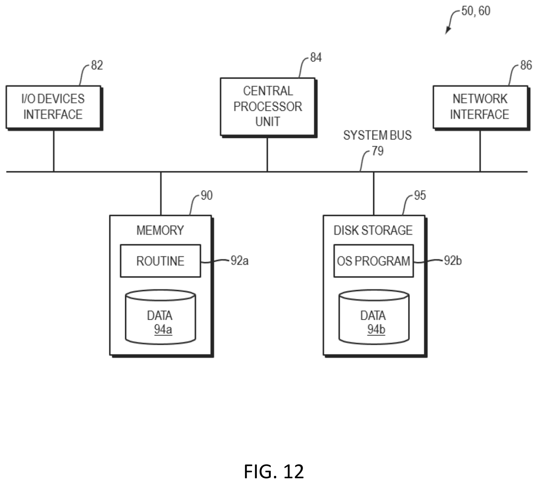

FIG. 12 is a block diagram illustrating an example embodiment of a computer node (e.g., client processor(s)/device(s) 50 or server computer(s) 60) in the computer network 70 of FIG. 11. Each computer node 50, 60 contains system bus 79, where a bus is a set of hardware lines used for data transfer among components of a computer or processing system. The system bus 79 is essentially a shared conduit that connects different elements of a computer system (e.g., processor, disk storage, memory, I/O ports, network ports, etc.) that enables transfer of information between the elements. Attached to the system bus 79 is an I/O devices interface 82 for connecting various input and output devices (e.g., keyboard, mouse, display(s), printer(s), speaker(s), etc.) to the computer node 50, 60. A network interface 86 allows the computer node to connect to various other devices attached to a network (e.g., the network 70 of FIG. 11). A memory 90 provides volatile storage for computer software instructions 92a and data 94a used to implement an embodiment of the present disclosure. Disk storage 95 provides non-volatile storage for the computer software instructions 92b and data 94b used to implement an embodiment of the present disclosure, for example, methods 200, 400, 800a-b, and 900. A central processor unit 84 is also attached to the system bus 79 and provides for execution of computer instructions.

In one embodiment, the processor routines 92a-92b and data 94a-94b are a computer program product (generally referenced as 92), including a non-transitory, computer readable medium (e.g., a removable storage medium such as DVD-ROM(s), CD-ROM(s), diskette(s), tape(s), etc.) that provides at least a portion of the software instructions for the embodiment. The computer program product 92 can be installed by any suitable software installation procedure, as is well known in the art. In another embodiment, at least a portion of the software instructions may also be downloaded over a cable, communication, and/or wireless connection. In other embodiments, the disclosure programs are a computer program propagated signal product embodied on a propagated signal on a propagation medium (e.g., a radio wave, an infrared wave, a laser wave, a sound wave, or an electrical wave propagated over a global network such as the Internet, or other network(s)). Such carrier medium or signals provide at least a portion of the software instructions for the present disclosure routines/program 92.

In alternative embodiments, the propagated signal is an analog carrier wave or digital signal carried on the propagated medium. For example, the propagated signal may be a digitized signal propagated over a global network (e.g., the Internet), a telecommunications network, or other networks (such as the network 70 of FIG. 11). In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of the computer program product 92 is a propagation medium that the computer system 50 may receive and read, such as by receiving the propagation medium and identifying a propagated signal embodied in the propagation medium, as described above for a computer program propagated signal product.

Generally speaking, the term "carrier medium" or transient carrier encompasses the foregoing transient signals, propagated signals, propagated medium, storage medium, and the like.

In other embodiments, the program product 92 may be implemented as a so-called Software as a Service (SaaS), or other installation or communication supporting end-users.

Embodiments or aspects thereof may be implemented in the form of hardware including but not limited to hardware circuitry, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, hardware, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and, thus, the data processors described herein are intended for purposes of illustration only and not as a limitation of the embodiments.

While example embodiments have been particularly shown and described, it will be understood by those skilled in the art that various changes in form and details may be made therein without departing from the scope of the embodiments encompassed by the appended claims.

For example, the foregoing description and details of embodiments reference Applicant-Assignee (Dassault Systems Americas Corporation) and Dassault Systèmes tools and platforms, for purposes of illustration and not limitation. Other similar tools and platforms are also suitable.

## Claims

1. A computer-implemented method for training an artificial intelligence (AI) model to generate optimized parameters for part manufacturing, the method comprising, by a processor:
generating a simulation data set comprising respective sets of manufacturing parameters with associated values;
generating a training data set using the simulation data set generated by performing a respective manufacturing simulation using each respective set of manufacturing parameters with associated values, wherein (i) results of performing each respective manufacturing simulation include a representation of a part resulting from the respective manufacturing simulation and a toolpath of the respective manufacturing simulation and (ii) the training data set is composed of a subset of the results of performing each respective manufacturing simulation and respective sets of manufacturing parameters with associated values corresponding to the subset of the results; and
training an AI model using the training data set generated, the AI model trained configured to determine optimized manufacturing parameters.

2. The computer-implemented method of Claim 1, wherein the AI model trained is configured to determine the optimized manufacturing parameters with optimized associated values.

3. The computer-implemented method of Claim 1 or 2, further comprising:
receiving (i) an indication of a key performance indicator (KPI) and (ii) an indication of a given part; and
processing the indication of the KPI and the indication of the given part with the AI model trained to determine given manufacturing parameters for manufacturing the given part that optimizes the KPI.

4. The computer-implemented method of Claim 3, wherein the KPI is at least one of: a machining time, a part surface quality, and an amount of material removed.

5. The computer-implemented method of Claim 3 or 4, wherein the given manufacturing parameters include optimized values for the given manufacturing parameters.

6. The computer-implemented method of any one of Claims 3 to 5, further comprising:
manufacturing the given part utilizing the given manufacturing parameters determined.

7. The computer-implemented method of any one of Claims 1 to 6, wherein a given representation of a given part resulting from a given respective manufacturing simulation is a top-view image of the given part.

8. The computer-implemented method of Claim 7, wherein the given representation of the given part resulting from the given respective manufacturing simulation comprises depth information.

9. The computer-implemented method of any one of Claims 1 to 8, wherein a given representation of a given part resulting from a given respective manufacturing simulation is a three-dimensional mesh model representation of the given part.

10. The computer-implemented method of any one of Claims 1 to 9, wherein generating the training data set comprises:
selecting the subset of the results of performing each respective manufacturing simulation based on one or more KPI.

11. The computer-implemented method of any one of Claim 1 to 10, wherein a given respective set of manufacturing parameters comprises at least one of: a cutting tool, a material, a toolpath strategy, a tool diameter ratio, a cutting depth, a step-over, a feed rate, a spindle speed, a start point, and an end point.

12. The computer-implemented method of Claim 11, wherein the toolpath strategy is: spiral morphing, back-and-forth, helical, concentric, or offset on part.

13. The computer-implemented method of any one of Claims 1 to 12,
wherein at least one respective manufacturing simulation of at least one part simulates additive manufacturing or subtractive manufacturing.

14. The computer-implemented method of any one of Claims 1 to 13,
wherein the AI model is a convolutional neural network (CNN).

15. The method of any one of Claims 1 to 14, wherein the AI model is a first AI model and the method further comprises:
using the training data set generated, training a second AI model to predict representations of parts.

16. A computer-implemented system for training an artificial intelligence (AI) model to generate optimized parameters for part manufacturing, the system comprising:
a processor; and
a memory with computer code instructions stored thereon, the processor and the memory configured to cause the system to perform the method of any one of claims 1 to 15.

17. A computer program product for training an artificial intelligence (AI) model to generate optimized parameters for part manufacturing, the computer program product comprising computer code instructions configured, when executed by a processor, to cause an apparatus associated with the processor to perform the method of any one of claims 1 to 15.
